# EUROPÄISCHE PATENTSCHRIFT

(11) **EP 1 389 717 B1**
(45) Veröffentlichungstag und Bekanntmachung des Hinweises auf die Patenterteilung: **13.12.2017**
(21) Anmeldenummer: 03017659.8
(22) Anmeldetag: 13.08.2003
(51) Int. Cl.: F24F 11/00, F24F 12/00

(54) **Luftaustauschvorrichtung, insbesondere für einen Innenraum eines Gebäudes, mit einer Lufstromregelung**
Air exchanging device, particularly for the interior of a building, with an airflow controller
Dispositif de renouvellement d'air, en particulier pour l'intérieur d'un bâtiment, avec un dispositif de régulation de débit d'air

(30) Priorität: 13.08.2002 DE 20212619 U
(43) Veröffentlichungstag der Anmeldung: 18.02.2004
(73) Patentinhaber: Meltem Wärmerückgewinnung GmbH & Co. KG, 82239 Alling (DE)
(72) Erfinder: REYNARTZ, Armin, 82239 Alling (DE)
(74) Vertreter: Schweiger, Martin

(56) Entgegenhaltungen:
- EP-A- 0 414 231
- EP-A- 0 928 932
- DE-A- 19 954 555
- FR-A- 2 370 238
- US-A- 4 461 344

## Beschreibung

Die Erfindung betrifft eine Luftaustauschvorrichtung, insbesondere für einen Innenraum eines Gebäudes, mit einer Luftstromregelung.

Zur Gewährleistung gleichbleibend hoher Atemluftqualität in Wohn- und Arbeitsräumen von Gebäuden wird oft ein Luftaustausch mit der Umwelt erzwungen. Dabei wird kühlere, unverbrauchte Außenluft in das Gebäudeinnere gefördert und gleichzeitig wärmere, verbrauchte Abluft aus dem Gebäudeinneren nach draußen gefördert. Aus Energieeffizienzgründen kann die Wärmeenergie der Abluft dazu verwendet werden, um die hineinströmende Außenluft zu erwärmen.

Dabei kommen Wärmetauscher zum Einsatz, die Wärme in Richtung eines Temperaturgefälles zwischen den zwei Luftströmen übertragen. Es sind Rohrbündel-, Rippenrohr-, Platten-, Spiral-, Spiralrohr-Doppelmantel- und Wickelwärmetauscher bekannt.

Beim Abkühlen der verbrauchten Abluft in dem Wärmetauscher entstehen an der Abkühlseite, insbesondere im Auslaßbereich der Abkühlseite, häufig große Mengen von Kondenswasser. Insbesondere im Winter, wenn sehr kalte Außenluft in den Wärmetauscher strömt, kann das Problem auftreten, daß das sich an der Abkühlseite des Wärmetauschers bildende Kondenswasser gefriert. Dadurch wird der Wirkungsgrad des Wärmetauschers reduziert. Große Mengen an gefrorenem Kondenswasser können dazu führen, daß die Drehbewegung desjenigen Lüfters behindert wird, der die verbrauchte Luft nach draußen befördert, oder daß die Drehbewegung dieses Lüfters ganz zum Erliegen kommt. Dies wird auch als Zufrieren des Luftaustauschsystems bezeichnet. In diesem Fall ist der Wirkungsgrad des Wärmetauschers gleich Null. Sogar eine Beschädigung des Luftaustauschsystems infolge von gefrorenem Kondenswasser ist denkbar.

Um dieses Problem zu umgehen, ist es denkbar, die kalte Außenluft zu erwärmen, bevor sie in das Luftaustauschsystem hineinströmt. Dies ist jedoch mit zusätzlichem Energieaufwand verbunden.

Die EP 0928 932 offenbart eine Raumbeheizungsanlage, bei der eine Kontrolleinrichtung die minimale Differenz der Durchflussraten zweier Lüfter in Reaktion auf ein Temperatursignal verändert.

Die US 4461344 offenbart einen Wärmetauscher, bei dem ein Schalter einen Zuluft-Lüfter in Reaktion auf ein Temperatursignal abschaltet.

Es ist daher Aufgabe der Erfindung, eine Luftaustauschvorrichtung bereitzustellen, bei der ein Gefrieren des Kondenswassers auf einfache Weise vermieden wird.

Diese Aufgabe wird durch den Gegenstand der unabhängigen Ansprüche gelöst. Vorteilhafte Ausgestaltungen angeben sich aus den jeweiligen Unteransprüchen.

Die Erfindung umfaßt eine Luftaustauschvorrichtung, insbesondere für einen Innenraum eines Gebäudes, die einen Wärmetauscher mit einer Erwärmseite und mit einer Abkühlseite aufweist. Dieser Wärmetauscher ist insbesondere als Plattenwärmetauscher ausgebildet, kann aber auch als Wärmetauscher der in der Einleitung genannten Art ausgebildet sein. Im Auslaßbereich der Abkühlseite des Wärmetauscher ist ein Fortluft-Lüfter angeordnet, der als Radial- oder Axiallüfter vorliegen kann. Des weiteren umfaßt die erfindungsgemäße Luftaustauschvorrichtung wenigstens einen Temperatursensor, der entweder in dem Bereich des Wärmetauschers oder in einem Einlaß- bzw. Auslaßbereich der Luftaustauschvorrichtung vorgesehen sein kann.

Gemäß einem Grundgedanken der Erfindung ist der durch den Fortluft-Lüfter förderbare Luftstrom in Abhängigkeit von der durch den Temperatursensor bzw. durch die Temperatursensoren gemessene Temperatur veränderbar. Wenn die gemessene Temperatur einen bestimmten vorgebbaren Temperaturgrenzwert unterschreitet, kann der durch den Fortluft-Lüfter geförderte Luftstrom vergrößert werden, um ein größeres Volumen an warmer verbrauchter Abluft durch den Wärmetauscher zu transportieren und um auf diese Weise ein Einfrieren des Wärmetauschers zu verhindern. Es ist ebenfalls möglich, den durch den Fortluft-Lüfter geförderten Luftstrom auf Null herunterzuregeln und den Betrieb der Luftaustauschvorrichtung so zu unterbrechen.

Die vorzugsweise in einem Gebäudeinneren angebrachte Luftaustauschvorrichtung erwärmt sich dann wieder und nimmt den Betrieb vorteilhafterweise wieder auf, wenn die durch den Temperatursensor bzw. durch die Temperatursensoren gemessene Temperatur einen ebenfalls vorgebbaren Temperaturgrenzwert wieder überschreitet. Dieser Temperaturgrenzwert für die Wiederinbetriebnahme der Luftaustauschvorrichtung ist vorzugsweise größer ausgebildet als der Temperaturgrenzwert für das Ausschalten derselben. So kann insbesondere ein Temperaturgrenzwert von 3°C bzw. 2°C für das Ausschalten der Luftaustauschvorrichtung und ein Temperaturgrenzwert von 5°C für die Wiederinbetriebnahme derselben vorgesehen werden.

Die Erfindung bezieht sich auch auf eine Luftaustauschvorrichtung, die anstelle des Fortluft-Lüfters oder zusätzlich zu dem Fortluft-Lüfter einen Zuluft-Lüfter aufweist, der im Einlaßbereich der Erwärmseite des Wärmetauscher angeordnet ist. In diesem Fall ist der durch den Zuluft-Lüfter förderbare Luftstrom abhängig von der durch den Temperatursensor bzw. durch die Temperatursensoren gemessenen Temperatur veränderbar. Bei dieser Ausgestaltung der Erfindung kann der durch den Zuluft-Lüfter geförderte Luftstrom verkleinert oder ganz auf Null heruntergeregelt werden, wenn die Zuluft einen vorgebbaren Temperaturgrenzwert unterschreitet. Wenn ein weiterer vorgebbarer Temperaturgrenzwert für die Wiederinbetriebnahme der Luftaustauschvorrichtung überschritten wird, so wird der Zuluft-Lüfter wieder in Betrieb genommen und damit der durch ihn geförderte Luftstrom insbesondere stufenweise vergrößert.

Eine Luftaustauschvorrichtung mit einem Fortluft-Lüfter oder mit einem Zuluft-Lüfter wird ein Gefrieren des entstehenden Kondenswassers auf einfache Weise vermieden. Bei einer Luftaustauschvorrichtung, die sowohl einen Fortluft-Lüfter als auch einen Zuluft-Lüfter aufweist, sind die Luftströme, die durch den Zuluft-Lüfter und durch den Fortluft-Lüfter bewegt werden, insbesondere unabhängig voneinander einstellbar. Dadurch wird ein optimaler Wirkungsgrad der Luftaustauschvorrichtung sichergestellt und gleichzeitig ein Einfrieren der Luftaustauschvorrichtung zuverlässig vermieden.

Gemäß einer ersten Ausführungsform der Erfindung können der Abluftstrom und der Zuluftstrom eingestellt werden, indem die Drehfrequenzen des Fortluft-Lüfters und/oder des Zuluft-Lüfters temperaturabhängig verändert werden. Wird beispielsweise durch einen Temperatursensor ein Temperaturwert in der Luftaustauschvorrichtung gemessen, der den vorgebbaren Temperaturgrenzwert unterschreitet, so kann die Drehfrequenz des Fortluft-Lüfters erhöht und/oder die Drehfrequenz des Zuluft-Lüfters verkleinert werden. Wird dadurch keine Erhöhung der gemessenen Temperatur über den betreffenden Temperaturgrenzwert bewirkt, so können die Drehfrequenzen des Fortluft-Lüfters und/oder des Zuluft-Lüfters ganz auf Null heruntergefahren werden. Die Drehfrequenzen des Zuluft-Lüfters und/oder des Fortluft-Lüfters sind insbesondere stufenweise regelbar, wobei für den Zuluft-Lüfter eine untere Lüftungsstufe und/oder für den Fortluft-Lüfter eine obere Lüftungsstufe wählbar sind, die nicht unter- bzw. überschritten werden können. Durch das Vorsehen einer solchen oberen Lüftungsstufe für den Fortluft-Lüfter wird auf diese Weise eine starke, von sich im Gebäudeinneren aufhaltenden Personen als störend empfundene Geräuschentwicklung vermieden.

Durch derartig stufenweise einstellbare Fortluft- bzw. Zuluft-Lüfter wird eine besonders einfache und gleichzeitig effektive Funktionsweise der erfindungsgemäßen Luftaustauschvorrichtung gewährleistet.

Es ist auch denkbar, anstelle der Drehfrequenzen der jeweiligen Lüfter die Anstellwinkel der Lüfterblätter zu verändern, um auf diese Weise die jeweils förderbaren Luftströme einzustellen. Unter Anstellwinkel wird dabei der Winkel zwischen einem Lüfterblatt und dem Radius des Lüfters verstanden.

Wenn wenigstens ein Temperatursensor an der Abkühlseite des Wärmetauschers angeordnet ist, so kann durch diesen die Temperatur des Abluftstroms zuverlässig und zeitnah gemessen werden. Einem unerwünschten, zu starken Temperaturabfall des Abluftstroms kann so rechtzeitig entgegengesteuert werden.

Besonders vorteilhaft ist es, wenn wenigstens ein Temperatursensor im Auslaßbereich der Abkühlseite des Wärmetauschers, insbesondere nahe dem Einlaßbereich der Erwärmseite des Wärmetauschers angeordnet ist. Dort weist der Abluftstrom nämlich seinen geringsten Temperaturwert auf. Erfahrungsgemäß ist in diesem Bereich die Gefahr des Einfrierens des Wärmetauschers am höchsten. Durch das Positionieren wenigstens eines Temperatursensors in diesem Bereich kann das Einfrieren des Wärmetauschers besonders zuverlässig vermieden werden.

Wenn wenigstens ein Temperatursensor an der Erwärmseite des Wärmetauschers, insbesondere an einem Einlaßbereich der Erwärmseite angeordnet ist, so kann die Temperatur der in das Gebäudeinnere einströmenden Außenluft unmittelbar und zuverlässig erfaßt werden und bei einem Absinken der Außenlufttemperatur unter einen bestimmten Temperaturgrenzwert der Zuluft-Lüfter und/oder der Fortluft-Lüfter geeignet geregelt werden.

Gemäß einer vorteilhaften Weiterbildung der Erfindung können mehrere Temperatursensoren in der Luftaustauschvorrichtung vorgesehen sein. Dadurch können die unterschiedlichen Temperaturen, die in der Luftaustauschvorrichtung vorkommen, parallel betrachtet werden. Die beiden durch die Luftaustauschvorrichtung fließenden Luftströme können dadurch besonders präzise an den jeweiligen Temperaturverhältnisse angepaßt werden. Dabei ist es denkbar, aus mehreren gemessenen Temperaturen jeweils den kleinsten Wert auszuwählen oder auch einen gewichteten Mittelwert über mehrere Temperaturwerte zu bilden.

In einer weiteren vorteilhaften Ausgestaltung der Erfindung sind bestimmte Zeitintervalle vorgesehen, in denen bzw. nach denen die Temperaturwerte des Temperatursensors oder der Temperatursensoren gemessen werden. Abhängig von diesen Temperaturwerten ist der von dem Zuluft-Lüfter und/oder von dem Fortluft-Lüfter geförderte Luftstrom um jeweils einen vorgebbaren Betrag vergrößerbar und/oder verkleinerbar. Eine auf diese Weise betriebene Luftaustauschvorrichtung ist auf besonders einfache und zuverlässige Weise vor dem Einfrieren geschützt.

Die Erfindung ist in den Zeichnungen anhand eines Ausführungsbeispiels näher veranschaulicht.
- Figur 1: zeigt eine schematische Darstellung einer Draufsicht auf eine Luftaustauschvorrichtung gemäß einem Ausführungsbeispiel,
- Figur 2: zeigt eine schematische Darstellung eines Querschnitts einer an einer Außenwand eines Gebäudes befestigten Luftaustauschvorrichtung gemäß Figur 1,
- Figur 3: zeigt eine schematische Darstellung eines weiteren Querschnitts der Luftaustauschvorrichtung gemäß Figur 1,
- Figur 4: zeigt eine Darstellung einer ersten abluftstromtemperaturabhängigen Luftstromregelung der in den Figuren 1-3 gezeigten Luftaustauschvorrichtung gemäß einem ersten Ausführungsbeispiel,
- Figur 5: zeigt eine Darstellung einer zweiten abluftstromtemperaturabhängigen Luftstromregelung der in den Figuren 1-3 gezeigten Luftaustauschvorrichtung gemäß einem zweiten Ausführungsbeispiel,
- Figur 6: zeigt eine Darstellung einer dritten abluftstromtemperaturabhängigen Luftstromregelung der in den Figuren 1-3 gezeigten Luftaustauschvorrichtung gemäß einem dritten Ausführungsbeispiel.

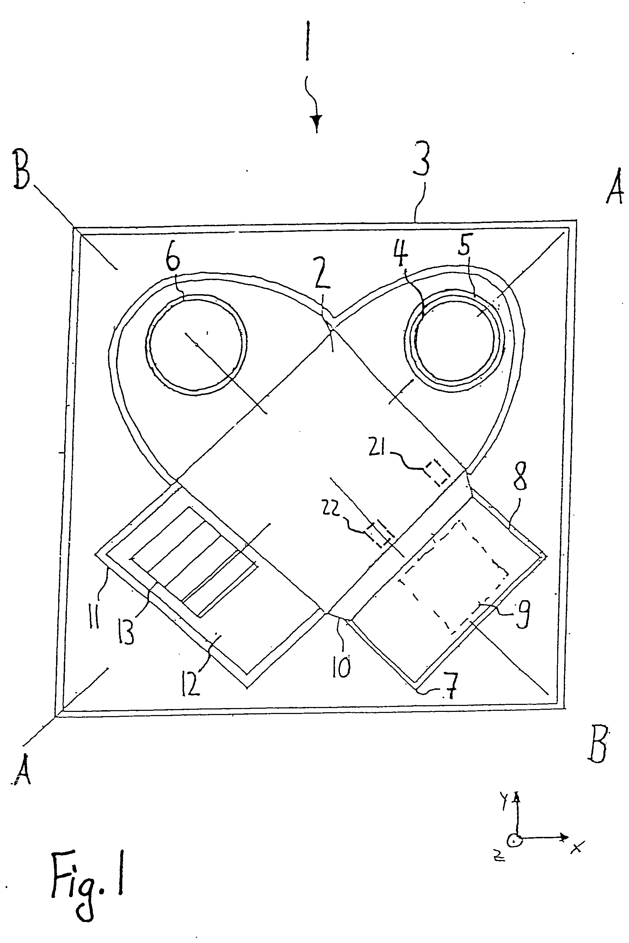

Figur 1 zeigt eine schematische Darstellung einer Draufsicht auf eine Luftaustauschvorrichtung 1. Die Begriffe "unten" und "oben" werden hier so zur Beschreibung verwendet, wie es in Figur 1 mittels der y-Achse eines Koordinatensystems veranschaulicht ist. Die Begriffe "vorne" und "hinten" werden hier in Richtung der z-Achse gesehen verwendet. Die Begriffe "rechts" und "links" werden in Richtung der x-Achse gesehen verwendet.

Die Luftaustauschvorrichtung 1 ist von einem quadratischen Gehäuse 3 umschlossen. Bei der in Figur 1 gezeigten Draufsicht ist die Abdeckplatte des Gehäuses 3 abgenommen. Das Gehäuse 3 weist im Ausführungsbeispiel Kunststoff auf, ist aber auch aus anderen Materialien fertigbar.

Mittig in dem Gehäuse 3 ist ein quadratischer Plattenwärmetauscher 2 angeordnet, insbesondere aus gut wärmeleitendem Material, wobei in der Draufsicht gemäß Figur 1 nur die vorderste Platte des Plattenwärmetauschers 2 sichtbar ist. Die Seitenlänge des Plattenwärmetauschers 2 entspricht knapp der Hälfte der Seitenlänge des Gehäuses 3. Der Plattenwärmetauscher 2 ist in einem Winkel von 45° bezogen auf das Gehäuse 3 gedreht angeordnet.

Oberhalb der rechten oberen Seite des Plattenwärmetauschers 2 ist eine zylinderförmige Außenluft-Rundfilterpatrone 5 im wesentlichen zentriert zum Plattenwärmetauscher 2 angeordnet. Die Außenluft-Rundfilterpatrone 5 liegt mit ihrem unteren Rand auf der Unterseite des Gehäuses 3 auf. In der in Figur 1 gezeigten Draufsicht auf die Außenluft-Rundfilterpatrone 5 ist nur deren kreisringförmiger, dünnwandiger Mantelbereich erkennbar. Beim Aufbringen einer hier nicht gezeigten Abdeckplatte auf das Gehäuse 3 liegt die Unterseite der Abdeckplatte auf der kreisringförmigen Oberseite der Außenluft-Rundfilterpatrone 5 auf.

Im Inneren der Außenluft-Rundfilterpatrone 5 ist eine kreisrunde Außenlufteinlaßöffnung 4 sichtbar, die sich auf der Unterseite des Gehäuses 3 befindet. Der Durchmesser der Außenlufteinlaßöffnung 4 ist geringfügig kleiner ausgebildet als der Innendurchmesser der Außenluft-Rundfilterpatrone 5. Der kleinere Durchmesser der Außenlufteinlaßöffnung 4 ist zur besseren Sichtbarmachung der Außenlufteinlaßöffnung 4 gewählt. Vorzugsweise ist der Durchmesser der Außenlufteinlaßöffnung 4 gleich dem Innendurchmesser der Außenluft-Rundfilterpatrone 5.

Um die Außenluft-Rundfilterpatrone 5 ist eine auf der Unterseite des Gehäuses 3 aufsetzende, gekrümmte Wand vorgesehen, die am oberen sowie am unteren Ende der rechten oberen Seite des Plattenwärmetauschers 2 abschließt.

Auf der linken oberen Seite des Plattenwärmetauschers 2 ist eine ähnlich geformte Wand vorgesehen, die am oberen sowie am unteren Ende der linken oberen Seite des Plattenwärmetauschers 2 abschließt.

Innerhalb dieser Wand ist eine Abluft-Rundfilterpatrone 6 in etwa zentriert angeordnet. Die Abluft-Rundfilterpatrone 6 entspricht hinsichtlich der Form und hinsichtlich der Größe der Außenluft-Rundfilterpatrone 5. In der in Figur 1 gezeigten Draufsicht auf die Abluft-Rundfilterpatrone 6 ist nur deren kreisringförmiger, dünnwandiger Mantelbereich erkennbar. In der hier nicht gezeigten Abdeckplatte des Gehäuses 3 ist eine Öffnung vorgesehen, die beim Aufsetzen der Abdeckplatte auf das Gehäuse 3 innerhalb der Abluft-Rundfilterpatrone 6 angeordnet ist, wobei die Unterseite der Abdeckplatte auf der kreisringförmigen Oberseite der Abluft-Rundfilterpatrone 6 aufliegt.

Die Außenluft-Rundfilterpatrone 5 sowie die Abluft-Rundfilterpatrone 6 weisen in ihrem Mantelbereich filterndes Material auf, insbesondere Filterpapier oder Aktivkohle.

An der rechten unteren Seite des Plattenwärmetauschers 2 ist ein Fortluft-Lüftergehäuse 7 mit einem Fortluftradiallüfter 8 sowie ein zwischen dem Fortluftradiallüfter 8 und dem Plattenwärmetauscher 2 angeordneter Trichter 10 vorgesehen. Der Trichter 10 setzt auf der gesamten Breite der rechten unteren Seite des Plattenwärmetauschers 2 an und verjüngt sich auf einer Strecke etwa einem Achtel der Seitenlänge des Plattenwärmetauschers 2 um einen Winkel von 30°. Auf der gesamten Breite des Auslaßseite des Trichters 10 setzt der Fortluftradiallüfter 8 an, von dem in der Draufsicht in Figur 1 lediglich die Verkleidung erkennbar ist. Die Drehachse des Fortluftradiallüfters 8 ist dabei senkrecht auf der Höhe der Mitte der rechten unteren Seite des Plattenwärmetauschers 2 ausgerichtet. Der Durchmesser bzw. die Breite des Fortluftradiallüfters 8 entspricht dabei in etwa der Auslaßseite des Trichters 10. Die Tiefe des Fortluftradiallüfters 8 entspricht ungefähr der Hälfte seiner Breite. Der Fortluftradiallüfter 8 ist von einem Fortluft-Lüftergehäuse 7 umschlossen, das auf seiner Unterseite eine in Figur 1 gestrichelt dargestellte, rechteckige Fortluftauslaßöffnung 9 aufweist. Diese Fortluftauslaßöffnung 9 ist dabei von der Mitte des Fortluftradiallüfters 8 ausgehend etwas nach rechts oben versetzt angeordnet.

An der linken unteren Seite des Plattenwärmetauschers 2 setzt ein von einem dünnwandigen Zuluft-Lüftergehäuse 11 umschlossener Zuluftansaugradiallüfter 12 an. Dabei ist die Drehachse des Zuluftansaugradiallüfters 12 orthogonal zu der linken unteren Seite des Plattenwärmetauschers 2 auf der Höhe deren Mitte angeordnet. Der Durchmesser des Zulaufansaugradiallüfters 12 bzw. seine Breite entspricht in etwa der Seitenlänge des Plattenwärmetauschers 2, seine Tiefe entspricht ungefähr der Hälfte seiner Breite. In dem linken oberen Bereich des Zuluftansaugradiallüfters 12 ist eine rechteckige Zulufteinlaßöffnung 13 angeordnet, durch die mehrere Lüfterschaufeln des Zuluftansaugradiallüfters 12 erkennbar sind. Diese sind im Ausführungsbeispiel parallel zur Drehachse des Zuluftansaugradiallüfters 12 angeordnet, können jedoch auch schräg zu dieser oder gekrümmt verlaufen.

Ein in Figur 1 als kleines gestricheltes Rechteck dargestellter erster Temperatursensor 21 ist in einem Eckbereich zwischen der rechten oberen und der rechten unteren Seite des Plattenwärmetauschers 2 hinter der vorderen Platte des Plattenwärmetauschers 2 angeordnet. Dieser erste Temperatursensor 21 befindet sich in einer Luftführung des Plattenwärmetauschers 2, der von Abluft durchströmt wird, und zwar in dem Auslaßbereich dieser Luftführung nahe den Einlaßbereichen derjenigen dahinter und davor liegenden Luftführungen, die von Zuluft durchströmt werden.

Ein weiterer in Figur 1 als kleines gestricheltes Rechteck dargestellter zweiter Temperatursensor 22 befindet sich mittig an der rechten unteren Seite des Plattenwärmetauschers 2 hinter der vorderen Platte des Plattenwärmetauschers 2. Dieser zweite Temperatursensor 22 ist im Auslaßbereich derselben von Abluft durchströmten Luftführung des Plattenwärmetauschers 2 vorgesehen.

Ein erste Schnittlinie A-A verläuft durch die linke untere sowie durch die rechte obere Ecke des Gehäuses 3. Eine weitere Schnittlinie B-B verläuft durch die linke obere sowie durch die rechte untere Ecke des Gehäuses 3.

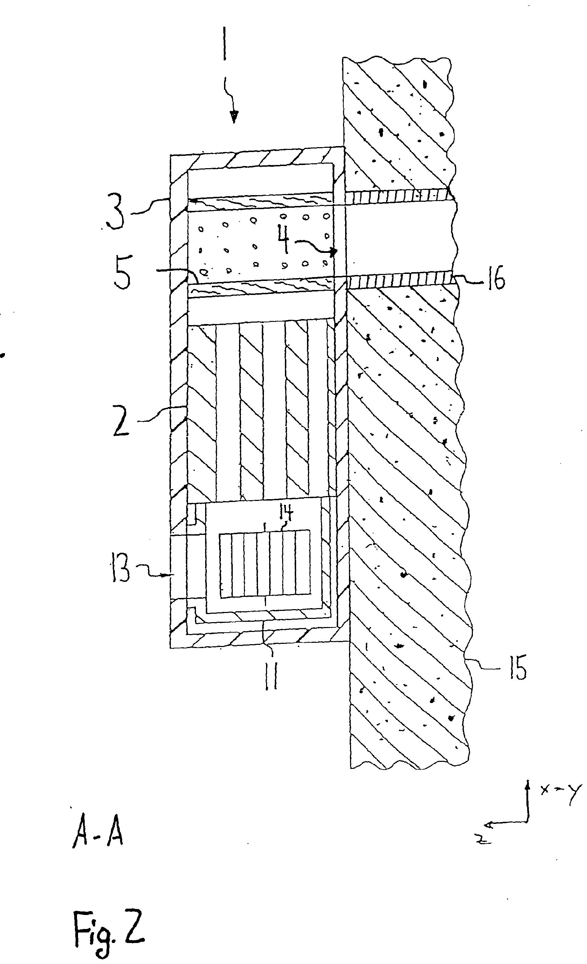

Figur 2 zeigt eine schematische Darstellung eines Querschnitts entlang der Schnittlinie A-A einer an einer Außenwand 15 befestigten Luftaustauschvorrichtung 1. In Figur 2 ist die Erwärmseite des Plattenwärmetauschers 2 betrachtet.

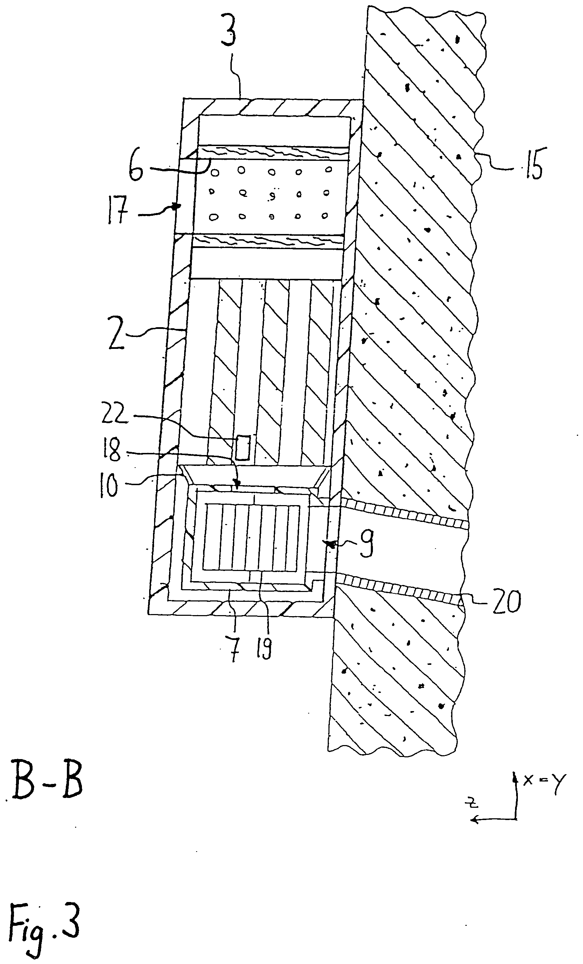

Die Luftaustauschvorrichtung 1 liegt mit der Rückseite seines Gehäuses 3 an der Vorderseite der Außenwand 15 an und befindet sich dementsprechend im Gebäudeinneren. Aus der Querschnittsdarstellung in Figur 3 ist ersichtlich, daß die diagonale Höhe der Luftaustauschvorrichtung 1 in etwa dem Dreifachen seiner Tiefe entspricht.

Dabei gliedert sich das Innere des Gehäuses 3 in einen zuoberst angeordneten Außenlufteinlaßbereich, in einen mittig angeordneten Plattenwärmetauscherbereich und in einen zuunterst angeordneten Zuluftauslaßbereich.

In dem Außenlufteinlaßbereich ist an der Rückseite des Gehäuses 3 die Außenlufteinlaßöffnung 4 ausgebildet, an die sich außenwandseitig ein waagerechtes Außenluftzufuhrrohr 16 anschließt. Der Außenlufteinlaßbereich umfaßt auch die Außenluft-Rundfilterpatrone 5, deren Mantelbereich sich waagerecht zwischen der Vorderseite und der Rückseite des Gehäuses 3 erstreckt und jeweils mit der Vorderseite und mit der Rückseite des Gehäuses 3 abschließt. Der mit der Rückseite des Gehäuses 3 abschließende Bereich der Außenluft-Rundfilterpatrone 5 umgrenzt dabei die Außenlufteinlaßöffnung 4. Der Fasermaterial, insbesondere Aktivkohle aufweisende Mantelbereich der Außenluft-Rundfilterpatrone 5 ist in Figur 2 besonders gut erkennbar.

In dem Plattenwärmetauscherbereich ist der Plattenwärmetauscher 2 angeordnet, der drei parallele, in der Darstellung gemäß Figur 3 von oben nach unten verlaufende Luftführungen aufweist. Der hier gezeigte Plattenwärmetauscher 2 weist acht übereinander angeordnete Platten auf.

In dem Zuluftauslaßbereich ist ein Zuluft-Lüfterrad 14 innerhalb des Zuluft-Lüftergehäuses 11 angeordnet. Das Zuluft-Lüfterrad 14 ist dabei horizontal mittig angeordnet. Auf gleicher Höhe mit den Lüfterschaufeln des Zuluft-Lüfterrads 14 ist in der Vorderseite des Gehäuses 3 sowie in der linken Seite des Zuluft-Lüftergehäuses 11 eine Zuluftauslaßöffnung 13 vorgesehen, deren Höhe der Breite der Lüfterschaufeln entspricht. Das Zuluft-Lüftergehäuse 11 setzt auf dem linken sowie auf dem rechten Ende der Unterseite des Plattenwärmetauschers 2 an, verläuft beidseitig vertikal nach unten und weist unmittelbar vor der Unterseite des Gehäuses 3 eine waagerechte Unterseite auf.

Figur 3 zeigt eine schematische Darstellung eines Querschnitts entlang der Schnittlinie B-B der an der Außenwand 15 befestigten Luftaustauschvorrichtung 1. In Figur 3 ist die Abkühlseite des Plattenwärmetauschers 2 betrachtet.

Das Innere des Gehäuses 3 gliedert sich dabei in einen oberen Ablufteinlaßbereich, in einen mittleren Plattenwärmetauscherbereich und in einen unteren Fortluftauslaßbereich.

Der Ablufteinlaßbereich beinhaltet die Abluft-Rundfilterpatrone 6, deren Mantelbereich sich waagerecht zwischen der Vorderseite und der Rückseite des Gehäuses 3 erstreckt und jeweils mit der Vorderseite und mit der Rückseite des Gehäuses 3 abschließt. Im Ablufteinlaßbereich ist auf der Vorderseite des Gehäuses 3 eine Ablufteinlaßöffnung 17 vorgesehen, die von der Abluft-Rundfilterpatrone 6 umgrenzt wird. Der Fasermaterial, insbesondere Aktivkohle aufweisende Mantelbereich der Abluft-Rundfilterpatrone 6 ist in Figur 3 besonders gut zu sehen.

Im Plattenwärmetauscherbereich ist der Plattenwärmetauscher 2 angeordnet, der vier parallele, vertikal verlaufende Luftführungen aufweist. Im unteren Bereich der zweiten Luftführung von links ist der bereits in Figur 1 gezeigte zweite Temperatursensor 22 schematisch dargestellt.

Der Fortluftauslaßbereich umfaßt einen hinsichtlich der Bauart, hinsichtlich der Größe und hinsichtlich der Ausrichtung mit dem in Figur 3 gezeigten Zuluft-Lüfterrad 14 identisches Fortlüftlüfterrad 19. Das Fortluft-Lüfterrad 19 ist zentriert innerhalb des Fortluft-Lüftergehäuses 7 angeordnet. Horizontal auf gleicher Höhe mit dem Fortluft-Lüfterrad 19 weist das Fortluft-Lüftergehäuse 7 auf der rechten Seite sowie das Gehäuse 3 auf seiner Rückseite jeweils eine Fortluftauslaßöffnung 9 auf. An dieser Fortluftauslaßöffnung 9 setzt ein Fortluftauslaßrohr 20 an, das leicht nach rechts unten geneigt verläuft. Mittig auf der Oberseite des Fortluft-Lüftergehäuses 7 ist eine Fortluftzuführungsöffnung 18 vorgesehen, deren Breite ungefähr einem Drittel der Gesamtbreite des Fortluft-Lüftergehäuses 7 entspricht. Zwischen dem linken und dem rechten Ende der Unterseite des Plattenwärmetauschers 2 und der linken und rechten Seite der Oberseite des Fortluft-Lüftergehäuses 7 ist der Trichter 10 angeordnet.

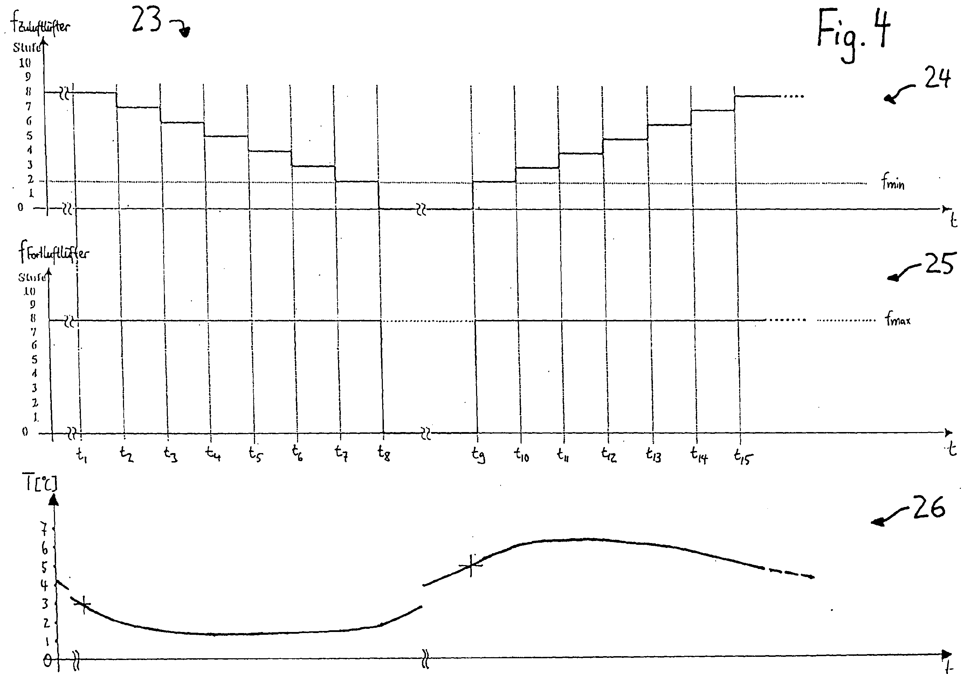

Figur 4 zeigt eine Darstellung einer ersten Luftstromregelung 23 der Luftaustauschvorrichtung 1 gemäß einem ersten Ausführungsbeispiel.

Die erste Luftstromregelung 23 gliedert sich in einen ersten Zuluftlüfter-Drehfrequenzverlauf 24, in einen ersten Fortluftlüfter-Drehfrequenzverlauf 25 und in einen ersten Abluftstrom-Temperaturverlauf 26, die jeweils in einem Schaubild dargestellt sind. Die Schaubilder der Verläufe 24, 25 und 26 sind untereinander angeordnet, wobei die vertikalen Achsen der Schaubilder den korrespondierenden Zeitverlauf in den Intervallen [0;t₁], [t₁;t₂], ..., [t₁₄;t₁₅] zeigen.

Der erste Zuluftlüfter-Drehfrequenzverlauf 24 zeigt den zeitlichen Verlauf der Drehfrequenz des Zuluft-Lüfterrads 14. Der erste Fortluftlüfter-Drehfrequenzverlauf 25 zeigt den zeitlichen Verlauf der Drehfrequenz des Fortluft-Lüfterrads 19. Auf der vertikalen Achse des Schaubilds des ersten Zuluftlüfter-Drehfrequenzverlaufs 24 und des ersten Fortluftlüfter-Drehfrequenzverlaufs 25 sind jeweils zehn Drehfrequenz-Stufen abgetragen, wobei eine lineare Skala zugrundegelegt wird und die Stufe 1 einer Drehfrequenz von 10 Drehungen/s entspricht.

Bei dem ersten Zuluftlüfter-Drehfrequenzverlauf 24 ist als untere Grenze eine Drehfrequenz der Stufe 2 vorgesehen. Dies ist in Figur 4 durch eine gestrichelte horizontale Linie fₘᵢₙ dargestellt. Bei dem ersten Fortluftlüfter-Drehfrequenzverlauf 25 ist als obere Grenze eine Drehfrequenz der Stufe 8 vorgesehen, was in Figur 4 durch eine gestrichelte horizontale Linie fₘₐₓ verdeutlicht ist. Durch das Vorsehen eines maximalen Drehfrequenzgrenzwerts fₘₐₓ für das Fortluft-Lüfterrad 19 kann eine Begrenzung der Geräuschentwicklung erreicht werden, durch das Vorsehen eines unteren Drehfrequenzgrenzwerts fₘᵢₙ für das Zuluft-Lüfterrad 14 wird ein Minimum der Zufuhr von frischer unverbrauchter Außenluft festgelegt.

Auf der vertikalen Achse des Schaubilds des ersten Abluftstrom-Temperaturverlaufs 26 ist die von dem ersten Temperatursensor 21 in dem Plattenwärmetauscher 2 gemessene Temperatur T der Abluft abgetragen. Dabei ist in Figur 4 der Wertebereich 0°C bis 7°C betrachtet.

Nachfolgend wird die erste Luftstromregelung 23 nachvollzogen, wobei der erste Zuluftlüfter-Drehfrequenzverlauf 24, der erste Fortluftlüfter-Drehfrequenzverlauf 25 und der erste Abluftstrom-Temperaturverlauf 26 zusammen betrachtet werden. Bei der ersten Luftstromregelung 23 des ersten Ausführungsbeispiels sowie bei den Luftstromregelungen der nachfolgenden Ausführungsbeispiele sind ein unterer Temperaturgrenzwert von 3°C und ein oberer Temperaturgrenzwert von 5°C für die Wiederinbetriebnahme der Luftaustauschvorrichtung 1 vorgesehen.

Im Zeitintervall [0;t₁] drehen sich das Zuluft-Lüfterrad 14 und das Fortluft-Lüfterrad 19 jeweils mit einer Drehfrequenz der Stufe 8. Die Drehfrequenz des Fortluft-Lüfterrad 19 nimmt im Zeitintervall [0;t₁] damit den Wert der oberen Grenze der Drehfrequenz fₘₐₓ an. Die durch den ersten Temperatursensor 21 erfaßte Temperatur sinkt in diesem Zeitintervall streng monoton, befindet sich jedoch zum Zeitpunkt t₁ noch oberhalb des unteren Temperaturgrenzwerts von 3°C. Dementsprechend wird zum Zeitpunkt t₁ keine Änderung der Drehfrequenzen des Zuluft-Lüfterrads 14 oder des Fortluft-Lüfterrads 19 vorgenommen. Im Zeitintervall [t₁;t₂] unterschreitet die von dem ersten Temperatursensor 21 gemessene Temperatur den unteren Temperaturgrenzwert von 3°C und nimmt zum Zeitpunkt t₂ einen Wert von ungefähr 2°C an. Um weniger kalte Außenluft in die Luftaustauschvorrichtung 1 zu befördern, wird zum Zeitpunkt t₂ die Drehfrequenz des Zuluft-Lüfterrads 14 auf die Stufe 7 verringert. Zum Zeitpunkt t₃ ist der Wert der von dem ersten Temperatursensor 21 gemessenen Temperatur T immer noch geringer ausgebildet als der untere Temperaturgrenzwert. Dementsprechend wird die Drehfrequenz des Zuluft-Lüfterrads 14 auf die Stufe 6 abgesenkt. Zu den Zeitpunkten t₄, t₅, t₆ und t₇ wird von dem ersten Temperatursensor 21 jeweils ein unter dem unteren Temperaturgrenzwert liegender Temperaturwert T gemessen. Dementsprechend erfolgt zu diesen Zeitpunkten jeweils eine einstufige Herabsetzung der Drehfrequenz des Zuluft-Lüfterrads 14.

Im Zeitintervall [t₇;t₈] läuft das Zuluft-Lüfterrad 14 mit der unteren Drehfrequenz fₘᵢₙ der Stufe 2, so daß eine weitere stufenweise Absenkung der Drehfrequenz des Zuluft-Lüfterrads 14 nicht möglich ist. Zum Zeitpunkt T₈ wird vom ersten Temperatursensor 21 eine Temperatur T gemessen, die immer noch unter dem unteren Temperaturgrenzwert liegt. Da auch die Drehfrequenz des Fortluft-Lüfterrads 19 der oberen Drehfrequenz fₘₐₓ entspricht, ist zu diesem Zeitpunkt weder ein stufenweises Vergrößern der Drehfrequenz des Fortluft-Lüfterrads 19 noch ein stufenweises Verkleinern der Drehfrequenz des Zuluft-Lüfterrads 14 möglich. Dementsprechend wird zum Zeitpunkt t₈ der Betrieb der Luftaustauschvorrichtung 1 gestoppt und sowohl das Zuluft-Lüfterrad 14 als auch das Fortluft-Lüfterrad 19 angehalten.

Die Luftaustauschvorrichtung 1 befindet sich im Gebäudeinneren und erfährt im Zeitintervall [t₈;t₉] infolge der relativ warmen Umgebung im Gebäudeinneren eine Erwärmung. Zum Zeitpunkt t₉ ist der vom ersten Temperatursensor 21 gemessene Temperaturwert T größer ausgebildet als der obere Temperaturgrenzwert von 5°C. Dementsprechend wird die Luftaustauschvorrichtung 1 wieder in Betrieb genommen, wobei die vor dem Anhalten anliegenden Drehfrequenzen, nämlich die Drehfrequenz der Stufe 2 für das Zuluft-Lüfterrad 14 und die Drehfrequenz der Stufe 8 für das Fortluft-Lüfterrad 19, gewählt werden.

Zum Zeitpunkt t₁₀ wird vom ersten Temperatursensor 21 eine Temperatur T gemessen, die über dem oberen Temperaturgrenzwert liegt. Dementsprechend wird die Drehfrequenz des Zuluft-Lüfterrads 14 um eine Stufe erhöht, um mehr unverbrauchte Außenluft in das Gebäudeinnere zu befördern. Da die Temperatur T auch zu den Zeitpunkten t₁₁, t₁₂, t₁₃, t₁₄ und t₁₅ jeweils über dem oberen Temperaturgrenzwert liegt, wird zu diesen Zeitpunkten die Drehfrequenz des Zuluft-Lüfterrads 14 jeweils um eine Stufe vergrößert. Demzufolge drehen sich sowohl das Zuluft-Lüfterrad 14 als auch das Fortluft-Lüfterrad 19 zum Zeitpunkt t₁₅ jeweils mit einer Drehfrequenz der Stufe 8. Da nach dem Zeitpunkt t₁₅ die von dem ersten Temperatursensor 21 gemessene Temperatur T nicht mehr größer als der obere Temperaturgrenzwert ausgebildet ist, erfolgt keine weitere Erhöhung der Drehfrequenz des Zuluft-Lüfterrads 14.

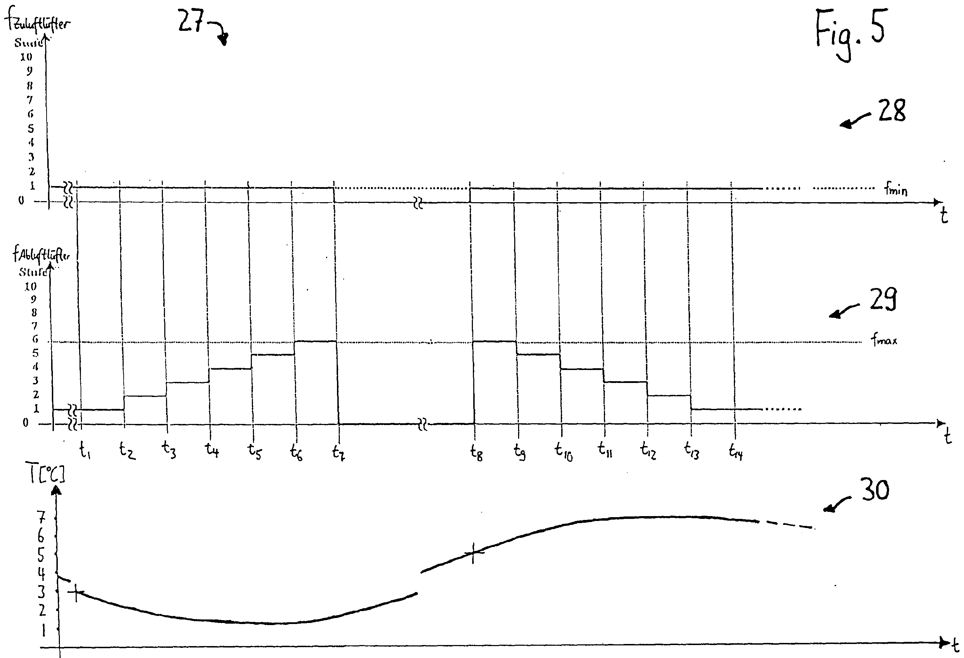

Figur 5 zeigt eine Darstellung einer zweiten Luftstromregelung 27 der Luftaustauschvorrichtung 1 gemäß einem zweiten Ausführungsbeispiel.

Die zweite Luftstromregelung 27 gliedert sich in einen zweiten Zuluftlüfter-Drehfrequenzverlauf 28, in einen zweiten Fortluftlüfter-Drehfrequenzverlauf 29 und in einen zweiten Abluftstrom-Temperaturverlauf 30. Die Darstellungsweise sowie die Bedeutung der Achsen der Schaubilder der drei Verläufe 28, 29 und 30 entsprechen jeweils der Darstellung in Figur 4.

Bei der zweiten Luftstromregelung 27 ist für das Zuluft-Lüfterrad 14 eine untere Grenze fₘᵢₙ der Drehfrequenz der Stufe 1 und für das Fortluft-Lüfterrad 19 eine obere Grenze fₘₐₓ der Drehfrequenz der Stufe 6 vorgesehen.

Im Zeitintervall [0;t₁] dreht sich das Zuluft-Lüfterrad 14 mit einer Drehfrequenz der Stufe 1, also mit der unteren Grenze der Drehfrequenz fₘᵢₙ. Das Fortluft-Lüfterrad 19 dreht sich in diesem Zeitintervall ebenfalls mit einer Drehfrequenz der Stufe 1. In dem Zeitintervall [0;t₁] ist die von dem ersten Temperatursensor 21 gemessene Temperatur zwar fallend, jedoch noch größer als der untere Temperaturgrenzwert von 3°C ausgebildet. Deswegen wird zum Zeitpunkt t₁ keine Änderung der Drehfrequenzen des Zuluft-Lüfterrads 14 und des Fortluft-Lüfterrads 19 vorgenommen.

Zum Zeitpunkt t₂ wird erstmals eine den unteren Temperaturgrenzwert von 3°C unterschreitende Temperatur T durch den ersten Temperatursensor 21 gemessen. Da die Drehfrequenz des Zuluft-Lüfterrads 14 bereits den Wert der unteren Grenze der Drehfrequenz fₘᵢₙ annimmt und nicht weiter gesenkt werden kann, wird zum Zeitpunkt t₂ die Drehfrequenz des Fortluft-Lüfterrads 19 um eine Stufe auf die Stufe 2 gesteigert. Da zu den Zeitpunkten t₃, t₄, t₅ und t₆ von dem ersten Temperatursensor 21 jeweils ein den unteren Temperaturgrenzwert unterschreitender Temperaturwert T detektiert wird, wird die Drehfrequenz des Fortluft-Lüfterrads 19 zu diesen Zeitpunkten jeweils um eine Stufe vergrößert, bis sie in dem Zeitintervall [t₆;t₇] den Wert der Stufe 6, also die obere Grenze fₘₐₓ der Drehfrequenz annimmt.

Zum Zeitpunkt t₇, an dem das Zuluft-Lüfterrad 14 mit der unteren Drehfrequenz fₘᵢₙ und das Fortluft-Lüfterrad 19 mit der oberen Drehfrequenz fₘₐₓ bewegt werden, wird von dem ersten Temperatursensor 21 eine Temperatur T von 2°C gemessen, die erneut unter dem unteren Temperaturgrenzwert von 3°C liegt. Dementsprechend wird die Luftaustauschvorrichtung 1 in einen Pausezustand versetzt, dadurch daß die Bewegungen des Zuluft-Lüfterrads 14 und des Fortluft-Lüfterrads 19 gestoppt werden. In diesem Pausezustand erwärmt sich die Luftaustauschvorrichtung 1 kontinuierlich.

Zum Zeitpunkt t₈ wird vom ersten Temperatursensor 21 ein Temperaturwert T gemessen, der größer als der obere Temperaturgrenzwert von 5°C ist. Dementsprechend wird die Luftaustauschvorrichtung 1 in den Zustand versetzt, den sie vor dem Anhalten innehatte. Zu den Zeitpunkten t₉, t₁₀, t₁₁, t₁₂ und t₁₃ wird jeweils ein Temperaturwert T detektiert, der oberhalb des oberen Temperaturgrenzwerts von 5°C liegt. Dementsprechend wird zu diesen Zeitpunkten die Drehfrequenz des Fortluft-Lüfterrads 19 stufenweise verringert, bis sie ab dem Zeitpunkt t₁₃ den Wert der Stufe 1 annimmt. Ab dem Zeitpunkt t₁₃ arbeitet die Luftaustauschvorrichtung 1 mit konstanten Drehfrequenzen der Stufe 1 sowohl für das Zuluft-Lüfterrad 14 als auch für das Fortluft-Lüfterrad 19 weiter. Die von dem ersten Temperatursensor 21 gemessene Temperatur T ist ab dem Zeitpunkt t₁₃ bis zu dem Ende der Darstellung in Figur 5 größer als der obere Temperaturgrenzwert von 5°C ausgebildet.

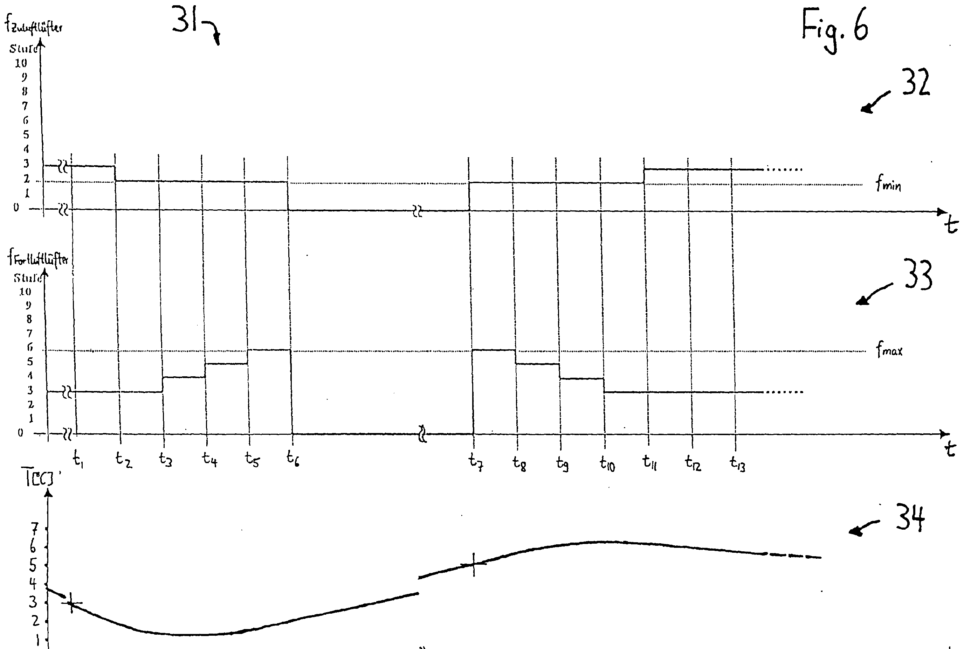

Figur 6 zeigt eine Darstellung einer dritten Luftstromregelung 31 der Luftaustauschvorrichtung 1 gemäß einem dritten Ausführungsbeispiel.

Die dritte Luftstromregelung 31 gliedert sich in einen dritten Zuluftlüfter-Drehfrequenzverlauf 32, in einen dritten Fortluftlüfter-Drehfrequenzverlauf 33 und in einen dritten Abluftstrom-Temperaturverlauf 34. Die Darstellungsweise sowie die Bedeutung der Achsen der Schaubilder der drei Verläufe 32, 33 und 34 entsprechen jeweils den Darstellungen der Figuren 4 und 5.

Für die Drehfrequenz des Zuluft-Lüfterrads 14 ist eine untere Grenze fₘᵢₙ der Drehfrequenz der Stufe 2 vorgesehen. Für das Fortluft-Lüfterrad 19 ist eine obere Grenze fₘₐₓ der Drehfrequenz der Stufe 6 vorgesehen.

Im ersten Intervall [0;t₁] arbeitet die Luftaustauschvorrichtung 1, wobei die Drehfrequenzen des Zuluft-Lüfterrads 14 und des Fortluft-Lüfterrads 19 jeweils die Stufe 3 annehmen. Zum Zeitpunkt t₁ ist die vom ersten Temperatursensor 21 gemessene Temperatur noch größer ausgebildet als der untere Temperaturgrenzwert von 3°C. Somit wird keine Änderung der Drehfrequenzen des Zuluft-Lüfterrads 14 und des Fortluft-Lüfterrads 19 vorgenommen.

Im Zeitintervall [t₁;t₂] sinkt die gemessene Temperatur T unter diesen unteren Temperaturgrenzwert, so daß die Drehfrequenz des Zuluft-Lüfterrads 14 im Zeitpunkt t₂ auf die der unteren Grenze fₘᵢₙ der Drehfrequenz entsprechende Stufe 2 abgesenkt wird.

Zu den Zeitpunkten t₃, t₄ und t₅ unterschreitet der gemessene Temperaturwert T jeweils den unteren Temperaturgrenzwert. Da das Zuluft-Lüfterrad 14 bereits auf der unteren Grenzfrequenz fₘᵢₙ läuft, wird zu diesen Zeitpunkten die Drehfrequenz des Fortluft-Lüfterrads 19 stufenweise angehoben, bis sie in dem Zeitintervall [t₅;t₆] den oberen Drehfrequenzgrenzwert fₘₐₓ der Stufe 6 erreicht. Zum Zeitpunkt t₆ wird abermals ein den unteren Temperaturgrenzwert unterschreitender Temperaturwert T detektiert, so daß zu diesem Zeitpunkt die Luftaustauschvorrichtung 1 in einen Pausezustand zur Erwärmung derselben versetzt wird.

Zum Zeitpunkt t₇ überschreitet die von dem ersten Temperatursensor 21 gemessene Temperatur T den oberen Temperaturgrenzwert von 5°C. Dementsprechend wird die Luftaustauschvorrichtung 1 in denjenigen Betriebszustand gesetzt, den sie vor der Unterbrechung innehatte.

Die gemessene Temperatur T unterschreitet auch in den folgenden Zeitpunkten t₈, t₉, t₁₀ und t₁₁ den oberen Temperaturgrenzwert, so daß zunächst die Drehfrequenz des Fortluft-Lüfterrads 19 stufenweise verkleinert wird, bis sie die ursprüngliche Drehfrequenz der Stufe 3 annimmt und anschließend die Drehfrequenz des Zuluft-Lüfterrads 14 um eine Stufe erhöht wird, so daß diese die ursprüngliche Drehfrequenz der Stufe 3 annimmt.

Ab dem Zeitpunkt t₁₁ bis zu dem Ende des in Figur 6 dargestellten Zeitbereichs bewegt sich die gemessene Temperatur T des Abluftstroms deutlich über dem unteren Temperaturgrenzwert von 3°C, so daß keine weitere Änderung der Drehfrequenz vorgenommen wird.

Die vorstehend beschriebenen abluftstromtemperaturabhängigen Luftstromregelungen 23, 27 und 31 stellen jeweils einen besonders effektiven Schutz gegen das Vereisen bzw. gegen das Zufrieren des Plattenwärmetauschers 2 bzw. der Luftaustauschvorrichtung 1 dar.

Bei der Abluftstrom-Temperaturverläufen 26, 30 und 34 handelt es sich um Hysteresekurven. Unter Hysterese wird das Nachwirken nach dem Aufhören der einwirkenden Kraft verstanden. In den vorliegenden Ausführungsbeispielen handelt es sich bei der einwirkenden Kraft jeweils um die Frequenzänderung bzw. um das Anhalten und das Wiederinbetriebnehmen der Lüfter.

### Bezugszeichenliste

- 1: Luftaustauschvorrichtung
- 2: Plattenwärmetauscher
- 3: Gehäuse
- 4: Außenlufteinlaßöffnung
- 5: Außenluft-Rundfilterpatrone
- 6: Abluft-Rundfilterpatrone
- 7: Fortluft-Lüftergehäuse
- 8: Fortluftradiallüfter
- 9: Fortluftauslaßöffnung
- 10: Trichter
- 11: Zuluft-Lüftergehäuse
- 12: Zuluftansaugradiallüfter
- 13: Zuluftauslaßöffnung
- 14: Zuluft-Lüfterrad
- 15: Außenwand
- 16: Außenluftzufuhrrohr
- 17: Ablufteinlaßöffnung
- 18: Fortluftzuführungsöffnung
- 19: Fortluft-Lüfterrad
- 20: Fortluftauslaßrohr
- 21: erster Temperatursensor
- 22: zweiter Temperatursensor
- 23: erste Luftstromregelung
- 24: erster Zuluftlüfter-Drehfrequenzverlauf
- 25: erster Fortluftlüfter-Drehfrequenzverlauf
- 26: erster Abluftstrom-Temperaturverlauf
- 27: zweite Luftstromregelung
- 28: zweiter Zuluftlüfter-Drehfrequenzverlauf
- 29: zweiter Fortluftlüfter-Drehfrequenzverlauf
- 30: zweiter Abluftstrom-Temperaturverlauf
- 31: dritte Luftstromregelung
- 32: dritter Zuluftlüfter-Drehfrequenzverlauf
- 33: dritter Fortluftlüfter-Drehfrequenzverlauf
- 34: dritter Abluftstrom-Temperaturverlauf

## Patentansprüche

1. Luftaustauschvorrichtung, insbesondere für einen Innenraum eines Gebäudes, mit den folgenden Merkmalen:
- die Luftaustauschvorrichtung (1) weist einen Wärmetauscher (2), insbesondere einen Plattenwärmetauscher (2), mit einer Erwärmseite und mit einer Abkühlseite auf,
- in der Luftaustauschvorrichtung (1) ist wenigstens ein Temperatursensor (21,22) angeordnet,
- im Auslaßbereich der Abkühlseite ist ein Fortluft-Lüfter (19) angeordnet,
- der durch den Fortluft-Lüfter (19) förderbare Luftstrom ist abhängig von der durch den Temperatursensor (21,22) bzw. die Temperatursensoren (21,22) gemessenen Temperatur veränderbar, **dadurch gekennzeichnet, dass** abhängig von der in bzw. nach einem bestimmten Zeitintervall gemessenen Temperatur wenigstens eines Temperatursensors (21,22) der von dem Fortluft-Lüfter (19) geförderte Luftstrom um jeweils einen vorgebbaren Betrag vergrößerbar und/oder verkleinerbar ist.

2. Luftaustauschvorrichtung, insbesondere für einen Innenraum eines Gebäudes, mit den folgenden Merkmalen:
- die Luftaustauschvorrichtung (1) weist einen Wärmetauscher (2), insbesondere einen Plattenwärmetauscher (2), mit einer Erwärmseite und mit einer Abkühlseite auf,
- in der Luftaustauschvorrichtung (1) ist wenigstens ein Temperatursensor (21,22) angeordnet,
- im Einlaßbereich der Erwärmseite ist ein Zuluft-Lüfter (14) angeordnet,
- der durch den Zuluft-Lüfter (14) förderbare Luftstrom ist abhängig von der durch den Temperatursensor (21,22) bzw. die Temperatursensoren (21,22) gemessenen Temperatur veränderbar, **dadurch gekennzeichnet, dass** abhängig von der in bzw. nach einem bestimmten Zeitintervall gemessenen Temperatur wenigstens eines Temperatursensors (21,22) der von dem Zuluft-Lüfter (14) geförderte Luftstrom um jeweils einen vorgebbaren Betrag vergrößerbar und/oder verkleinerbar ist.

3. Luftaustauschvorrichtung, insbesondere für einen Innenraum eines Gebäudes, mit den folgenden Merkmalen:
- die Luftaustauschvorrichtung (1) weist einen Wärmetauscher (2), insbesondere einen Plattenwärmetauscher (2),
mit einer Erwärmseite und mit einer Abkühlseite auf,
- in der Luftaustauschvorrichtung (1) ist wenigstens ein Temperatursensor (21,22) angeordnet,
- im Auslaßbereich der Abkühlseite ist ein Fortluft-Lüfter (19) angeordnet,
- im Einlaßbereich der Erwärmseite ist ein Zuluft-Lüfter (14) angeordnet,
- der durch den Zuluft-Lüfter (14) förderbare Luftstrom und der durch den Fortluft-Lüfter (19) förderbare Luftstrom sind abhängig von der durch den Temperatursensor (21,22) bzw. durch die Temperatursensoren (21,22) gemessenen Temperatur veränderbar, **dadurch gekennzeichnet, dass** abhängig von der in bzw. nach einem bestimmten Zeitintervall gemessenen Temperatur wenigstens eines Temperatursensors (21,22) der von dem Zuluft-Lüfter (14) und/oder von dem Fortluft-Lüfter (19) geförderte Luftstrom um jeweils einen vorgebbaren Betrag vergrößerbar und/oder verkleinerbar ist.

4. Luftaustauschvorrichtung nach einem der Ansprüche 1 bis 3,
**dadurch gekennzeichnet, daß**
die Drehfrequenzen des Fortluft-Lüfters (7.9) und/oder des Zuluft-Lüfters (14) abhängig von der durch den Temperatursensor (21;22) bzw. die Temperatursensoren (21,22) gemessenen Temperatur veränderbar sind.

5. Luftaustauschvorrichtung nach einem der Ansprüche 1 bis 4,
**dadurch gekennzeichnet, dass**
die Anstellwinkel der Lüfterblätter des Fortluft-Lüfters(19) und/oder des Zuluft-Lüfters (14) abhängig von der
durch den Temperatursensor (21;22) bzw. die Temperatursensoren (21,22) gemessenen Temperatur veränderbar sind.

6. Luftaustauschvorrichtung nach einem der Ansprüche 1 bis 5,
**dadurch gekennzeichnet, daß**
wenigstens ein Temperatursensor (21,22) an der Abkühlseite des Wärmetauschers (2) angeordnet ist.

7. Luftaustauschvorrichtung nach einem der Ansprüche 1 bis 6,
**dadurch gekennzeichnet, daß**
wenigstens ein Temperatursensor (21,22) im Auslassbereich der Abkühlseite des Wärmetauschers (2) angeordnet ist.

8. Luftaustauschvorrichtung nach einem der Ansprüche 1 bis 7,
**dadurch gekennzeichnet, daß**
wenigstens ein Temperatursensor (21) nahe dem Einlaßbereich der Erwärmseite des Wärmetauschers (2) angeordnet ist.

9. Luftaustauschvorrichtung nach einem der Ansprüche 1 bis 5,
**dadurch gekennzeichnet, daß**
wenigstens ein Temperatursensor an der Erwärmseite des Wärmetauschers (2), insbesondere an einem Einlassbereich der Erwärmseite des Wärmetauschers (2), angeordnet ist.

10. Luftaustauschvorrichtung nach einem der vorhergehenden Ansprüche,
**dadurch gekennzeichnet, daß**
mehrere Temperatursensoren (21,22) vorgesehen sind.

## Claims

1. Air exchange device, in particular for an inner room of a building, with the following features:
- the air exchange device (1) comprises a heat exchanger (2), in particular a plate heat exchanger (2), with a heating side and a cooling side,
- at least one temperature sensor (21, 22) is arranged in the air exchange device (1),
- an exhaust air fan (19) is arranged in the exhaust area of the heating side,
- the air current that is conveyable by the exhaust air fan (19) depends on the temperature measured by the temperature sensor (21, 22) or the temperature sensors (21, 22), **characterized in that**,
depending on the temperature of at least one temperature sensor (21, 22) that is measured in or after a certain time interval, the air current that is conveyed by the exhaust air fan (19) can be increased or decreased by a presettable amount, respectively.

2. Air exchange device, in particular for an interior room of a building, with the following features:
- the air exchange device (1) comprises a heat exchanger (2), in particular a plate heat exchanger (2), with a heating side and a cooling side,
- at least one temperature sensor (21, 22) is arranged in the air exchange device (1),
- a supply air fan (14) is arranged in the intake area of the heating side,
- the air current that is conveyable by the supply air fan (14) depends on the temperature measured by the temperature sensor (21, 22) or the temperature sensors (21, 22), **characterized in that**,
depending on the temperature of at least one temperature sensor (21, 22) that is measured in or after a certain time interval, the air current that is conveyed by the supply air fan (14) can be increased or decreased by a presettable amount, respectively.

3. Air exchange device, in particular for an interior room of a building, with the following features:
- the air exchange device (1) comprises a heat exchanger (2), in particular a plate heat exchanger (2), with a heating side and a cooling side,
- at least one temperature sensor (21, 22) is arranged in the air exchange device (1),
- an exhaust air fan (19) is arranged in the exhaust area of the heating side,
- a supply air fain (14) is arranged in the intake area of the heating side,
- the air current conveyable by the supply air fan (14) and the air current conveyable by the exhaust air fan (19) are depended on the temperature measured by the temperature sensor (21, 22) or the temperature sensors (21, 22), **characterized in that**,
depending on the temperature of at least one temperature sensor (21, 22) measured in or after a certain time interval, the air current conveyed by the supply air fan (14) and/or by the exhaust air fan (19) can be increased and/or decreased by a presettable amount, respectively.

4. Air exchange device according to one of the claims 1 to 3, **characterized in that** the rotation frequencies of the exhaust air fan (19) and/or of the supply air fan (14) depend on the temperature measured by the temperature sensor (21, 22) or the temperature sensors (21, 22).

5. Air exchange device according to one of the claims 1 to 4, **characterized in that**
the pitch of the fan blades of the exhaust air fain (19) and or of the supply air fan (14) can be modified depending on the temperature measured by the temperature sensor (21, 22) or the temperature sensors (21, 22).

6. Air exchange device according to one of the claims 1 to 5, **characterized in that**
at least one temperature sensor (21, 22) is arranged at the cooling side of the heat exchanger (2).

7. Air exchange device according to one of the claims 1 to 6, **characterized in that**
at least one temperature sensor (21, 22) is arranged in the exhaust area of the heat exchanger's (2) cooling side.

8. Air exchange device according to one of the claims 1 to 7, **characterized in that**
at least a temperature sensor (21) is arranged close to the intake area of the heat exchanger's (2) heating side.

9. Air exchange device according to one of the claims 1 to 5, **characterized in that**
at least one temperature sensor is arranged at the heat exchanger's (2) heating side, in particular at an intake area of the heat exchanger's (2) heating side.

10. Air exchange device according to one of the preceding claims, **characterized in that** a plurality of temperature sensors (21, 22) is provided.

## Revendications

1. Dispositif de renouvellement d'air, en particulier pour une chambre intérieure d'un bâtiment, avec des caractéristiques suivantes :
- le dispositif de renouvellement d'air (1) comprend un échangeur de chaleur (2), en particulier un échangeur de chaleur à plaques (2), avec un côté de chauffage et un côté de refroidissement,
- au moins un capteur de température (21, 22) est arrangé dans le dispositif de renouvellement d'air (1),
- un ventilateur d'air sortant (19) est arrangé dans la zone de sortie du côté de refroidissement,
- le courant d'air qui peut être transporté par le ventilateur d'air sortant (19) est modifiable en fonction de la température mesurée par le capteur de température (21, 22) ou les capteurs de température (21, 22), **caractérisé en ce que**
le courant air transporté par le ventilateur d'air sortant (19) peut être augmenté et/ou diminué par une valeur prédéterminable en fonction d'une température mesurée par le capteur de température (21, 22) ou les capteurs de température (21, 22) dans ou après un certain intervalle de temps.

2. Dispositif de renouvellement d'air, en particulier pour une chambre intérieure d'un bâtiment, avec des caractéristiques suivantes :
- le dispositif de renouvellement d'air (1) comprend un échangeur de chaleur (2), en particulier un échangeur de chaleur à plaques (2), avec un côté de chauffage et un côté de refroidissement,
- au moins un capteur de température (21, 22) est arrangé dans le dispositif de renouvellement d'air (1),
- un ventilateur d'air entrant (14) est arrangé dans la zone d'entrée du côté de chauffage,
le courant d'air qui peut être transporté par le ventilateur de courant d'air entrant (14) est modifiable en fonction de la température mesurée par le capteur de température (21, 22) ou les capteurs de température (21, 22), **caractérisé en ce que**
le courant d'air transporté par le ventilateur d'air entrant (14) peut être augmenté et/ou diminué par une valeur prédéterminable en fonction d'une température mesurée par le capteur de température (21, 22) ou les capteurs de température (21, 22) dans ou après un certain intervalle de temps.

3. Dispositif de renouvellement d'air, en particulier pour une chambre intérieure d'un bâtiment, avec des caractéristiques suivantes :
- le dispositif de renouvellement d'air (1) comprend un échangeur de chaleur (2), en particulier un échangeur de chaleur à plaques (2), avec un côté de chauffage et un côté de refroidissement,
- au moins un capteur de température (21, 22) est arrangé dans le dispositif de renouvellement d'air (1),
- un ventilateur d'air sortant (19) est arrangé dans la zone de sortie du côté de refroidissement,
- un ventilateur d'air entrant (14) est arrangé dans la zone d'entrée du côté de chauffage,
- le courant d'air qui peut être transporté par le ventilateur d'air entrant (14) et le courant d'air qui peut être transporté par le ventilateur d'air sortant (19) sont modifiables en fonction de la température mesurée par le capteur de température (21, 22) ou par les capteurs de température (21, 22),
**caractérisé en ce que** le courant d'air transporté par le ventilateur d'air entrant (14) et/ou le courant d'air transporté par le ventilateur d'air sortant (19) peut être augmenté et/ou diminué par une respective valeur prédéterminable.

4. Dispositif de renouvellement d'air selon une des revendications 1 à 3, **caractérisé en ce que**
les fréquences de rotation du ventilateur d'air sortant (19) et/ou du ventilateur d'air entrant (14) sont modifiables en fonction de la température mesuré par le capteur de température (21, 22) ou les capteurs de température.

5. Dispositif de renouvellement d'air selon une des revendications 1 à 4, **caractérisé en ce que**
l'angle d'attaque des pales du ventilateur d'air sortant (19) et/ou du ventilateur d'air entrant (14) sont modifiable en fonction de la température mesurée par le capteur de température (21, 22) ou par les capteurs de température (21, 22).

6. Dispositif de renouvellement d'air selon une des revendications 1 à 5, **caractérisé en ce que** au moins un capteur de température (21, 22) est arrangé au côté de refroidissement de l'échangeur de chaleur (2).

7. Dispositif de renouvellement d'air selon une des revendications 1 à 6, **caractérisé en ce que**
au moins un capteur de température (21, 22) est arrangé dans la zone de sortie du côté de refroidissement de l'échangeur de chaleur (2).

8. Dispositif de renouvellement d'air selon une des revendications 1 à 7,
**caractérisé en ce que**
au moins un capteur de température (21) est arrangé près de la zone d'entrée du côté de chauffage de l'échangeur de chaleur (2).

9. Dispositif de renouvellement d'air selon une des revendications 1 à 5, **caractérisé en ce que**
au moins un capteur de température est arrangé au côté de chauffage de l'échangeur de chaleur (2), en particulier à une zone d'entrée du côté de chauffage de l'échangeur de chaleur (2).

10. Dispositif de renouvellement d'air selon une des revendications précédentes, **caractérisé en ce que**
une pluralité de capteurs de température (21, 22) est pourvue.
